**Europäisches Patentamt**

**European Patent Office**

**Office européen des brevets**

(19)

(11) Veröffentlichungsnummer: **0 416 110 A1**

## (12) EUROPÄISCHE PATENTANMELDUNG
### veröffentlicht nach Art. 158 Abs. 3 EPÜ

(21) Anmeldenummer: 89910468.1

(51) Int. Cl.5: **G01N 21/05**

(22) Anmeldetag: 24.03.89

(86) Internationale Anmeldenummer:
**PCT/SU89/00075**

(87) Internationale Veröffentlichungsnummer:
**WO 90/11505 (04.10.90 90/23)**

(43) Veröffentlichungstag der Anmeldung:
**13.03.91 Patentblatt 91/11**

(84) Benannte Vertragsstaaten:
**AT BE DE FR GB IT NL SE**

(71) Anmelder: **INSTITUT KATALIZA SIBIRSKOGO OTDELENIA AKADEMII NAUK SSSR**
**pr. Akademika Lavrentieva, 5**
**Novosibirsk, 630090(SU)**

(72) Erfinder: **BREDIKHIN, Mikhail Nikolaevich**

**ul. Zhemchuzhnaya, 12-27**
**Novosibirsk, 630090(SU)**
Erfinder: **LOKHOV, Jury Anatolievich**
**ul. Tereshkovoi, 8-67**
**Novosibirsk, 630090(SU)**

(74) Vertreter: **Lehn, Werner, Dipl.-Ing. et al**
**Hoffmann, Eitle & Partner Patentanwälte**
**Arabellastrasse 4**
**W-8000 München 81(DE)**

(54) **THERMOSTATISCH GESTEUERTE FLÜSSIGKEITSKÜVETTE FÜR SPEKTROSKOPISCHE MESSUNGEN.**

(57) Die Erfindung bezieht sich auf eine Küvette, die eine optische Kammer zur Unterbringung einer Probe der zu untersuchenden Flüssigkeit besitzt. Die optische Kammer ist durch ein optisches Fenster (1) und einen Spiegel (2) gebildet, die in einem vorgegebenen Abstand voneinander angeordnet sind, wobei die Kammer mit einer Einrichtung zur Spiegeljustierung gegenüber dem Strahl eines Spektrometers versehen ist. Der Spiegel (2) stellt eine Wandung eines Thermostats (5) dar, innerhalb dessen ein mit einer Kammer (6) zur Probenherstellung ausgestattetes System zur Einbringung der Probe der zu untersuchenden Flüssigkeit in die optische Kammer untergebracht ist.

# THERMOSTATIERTE FLÜSSIGKEITSKÜVETTE FUR SPEKTROSKO-PISCHE MESSUNGEN

Technisches Gebiet

Die vorliegende Erfindung bezieht sich auf-Vorrichtungen für optischen Untersuchungen und betrifft insbesondere eine thermostatierte Flüssigkeitsküvette für spektroskopische Messungen.

Zugrundeliegender Stand der Technik

Es ist eine thermostatierte Flüssigkeitsküvette für spektroskopische Messungen bekannt ("Optika i spektroskopia", 1960, H. 9, No. 2, S. 188), welche eine optische Kammer enthält, die durch zwei optische Fenster gebildet ist, deren Abstand voneinander durch die Dicke einer dazwischenliegenden Ringeinlage vorgegeben wird. Ein System zur Einbringung einer Probe der zu untersuchenden Flüssigkeit in die optische Kammer stellt zwei Kupferkapillaren dar, die in einem der Fenster vorgesehene Öffnungen eingeführt sind, und als Thermostat dient ein Zylinderofen mit optischen Fenstern in dessen Stirnwänden. Als Temperaturfühler wird ein in einer Vertiefung einer der Fenster angeordnetes Thermopaar verwendet. Nachdem die optische Kammer mit der durch die Kupferkapillaren eingeführten Flüssigkeit gefüllt ist, wird sie abgedichtet und im Thermostat untergebbracht, worauf sie bis zur notwendigen Temperatur erwärmt wird, und dann werden spektroskopische Messungen der zu untersuchenden Flüssigkeit durchgeführt.

Diese Konstruktion gestattet es nicht, in der zu untersuchenden Flüssigkeit schnell ablaufende chemische Prozesse zu erforschen, weil die Einbringung einer Probe und die Thermostatierung der Küvette viel Zeit in Anspruch nimmt. Zudem erlaubt die beschriebene Konstruktion es nicht, Messungen bei Temperaturen, die unter der Raumteperatur liegen, durzhzuführen.

Es ist auch eine thermostatierte Flüssigkeitsküvette für spektroskopische Messungen bekannt ("Voprosy molekularnoi spektroskopii", 1974, Verlag Nauka, Novosibirsk, S. 311), deren optische Kammer durch zwei optische Fenster mit einer Ringeinlage dazwischen gebildet ist. Ein System zur Einbringung der Probe in die optische Kammer besteht aus Stutzen, die mit in einem der optischen Fenster ausgeführten Eindrehungen in Verbindung stehen. Der Thermostat besitzt einen aus Glashartgewebe bestehenden Mantel mit optischen Fenstern, einen mit abnehmbaren Heizelementen zur beschleunigter Erwärmung versehenen Küvettenhalter, Stutzen zur Ein- und Abführung eines Wärmemittels. Als Temperaturfühler der Probe der zu untersuchenden Flüssigkeit dient ein ins optische Fenster der Kammer eingesetztes Thermopaar. Nachdem die Probe der zu untersuchenden Flüssigkeit mit Hilfe einer Spritze in die optische Kammer durch Stutzen eingeführt ist, werden diese mit Teflonstopfen geschlossen. Dann wird die optische Kammer im Thermostat untergebracht, worin ihre Temperatur auf den notwendigen Wert gebracht wird. Darauf wird die Registrierung der Spektren der Probe der zu untersuchenden Flüssigkeit vorgenommen. Der Betriebstemperaturbereich beträgt 150 bis 250 ° C.

Diese Konstruktion erlaubt es nicht, die Forschung von schnell ablaufenden Prozessen durchzuführen, denn die Einführung einer Probe der zu untersucnenden Flüssigkeit nimmt viel Zeit in Anspruch. Darüber hinaus wird die Herstellung einer Probe, z.B. das Mischen von Komponenten, die flüssige, feste und gasförmige Stoffe darstellen, ausser der Küvette vorgenommen, weil diese keine dafür notwendigen Einrichtungen enthält. Das führt zu einer zusätzlichen Vergrösserung der Zeit zwischen der Probenherstellung und dem Anfang von spektroskopischen Untersuchungen, während welcher sich die Temperatur der Probe ändert, d.h. nicht bestimmt ist. Diese Konstruktion gestattet, als Wärmemittel lediglich Gase anzuwenden, die transparent im zu untersuchenden Spektralbereich und reaktionsträge gegenüber dem Werkstoff der Fenster sind, und sie lässt die Anwendung von durch eine höhere Wärmeleitfähigkeit gekennzeichneten Flüssigkeiten nicht zu. Ausserdem sieht die Konstruktion die Anwendung von wenigstens 4 optischen Fenstern vor.

Offenbarung der Erfindung

Der vorliegenden Erfindung liegt die Aufgabe zugrunde, eine thermostatierte Flüssigkeitsküvette für spektroskopische Messungen mit solch einer konstruktiven Ausführung der optischen Kammer und des Systems zur Einbringung der Probe der zu untersuchenden Flüssigkeit zu entwickeln, die es gestatten würde, den Erwärmungs- oder Abkühlungsprozess der Probe unter den Bedingungen des fehlenden Temperaturgefälles über den Raum der optischen Kammer wesentlich zu beschleunigen, die Herstellung der Probe der zu untersuchenden Flüssigkeit unmittelbar in der Küvette vorzunehmen und die Vorwärmeng oder Abkühlung der Probe oder deren Komponenten auszuführen, den Zeitraum zwischen der Herstellung der Probe und deren Einbringung in die optische Kammer zu verringern.

Die gestellte Aufgabe wird dadurch gelöst, dass in der thermostatierten Flüssigkeitsküvette für spektroskopische Messungen, die eine optische Kammer zur Unterbringung einer Probe der zu untersuchenden Flüssigkeit mit einem System zur Einbringung der Probe in dieselbe und einen Thermostat enthält, erfindungsgemäss die optische Kammer durch ein optisches Fenster und einen eine Wandung des Thermostats darstellenden Spiegel gebildet ist, welch beide in einem vorgegebenen Abstand voneinander angeordnet sind, und diese Kammer mit einer Einrichtung zur Spiegeljustierung gegenüber dem Strahl eines Spektrometers versehen ist, wobei das System zur Einbringung der Probe der zu untersuchenden Flüssigkeit in die optische Kammer innerhalb des Thermostats untergebracht und mit einer Kammer zur Herstellung der Probe der zu untersuchenden Flüssigkeit ausgestattet ist.

Die vorgeschlagene Erfindung erlaubt es, die thermostatierte Flüssigkeitsküvette in Kombination mit schnellwirkenden Fourier-Spektrometern zur Untersuchung von schnell ablaufenden chemischen Prozessen in einem weiten Temperaturbereich von 196 bis 300˚C zu verwenden, sie lässt die Benutzung eines breiten Kreises von flüssigen und gasförmigen Wärmeträgern zu, sie erlaubt, die Anzahl von teuren optischen Fenstern bis auf eines zu verringern, sie lässt Temperaturgefälle in der optischen Kammer praktisch vollkommen beseitigen, wodurch die Genauigkeit der Messung von kinetischen und thermodynamischen Charakteristiken der zu untersuchenden Prozesse wesentlich erhöht werden kann.

Überdies wird die Zeit, welche für die Durchführung von Experimenten und für die Vorbereitung der Küvette zur Arbeit notwendig ist, wesentlich verringert. In der erfindungsgemässen Konstruktion wird der Wechsel eines optischen Fensters leicht realisiert, was es gestattet, den Bereich der spektroskopischen Messungen vom fernen Infrarot bis zum Ultraviolett zu ändern sowie die Dicke der optischen Kammer zu variieren. Die Küvette ist betriebssicher und besitzt eine praktisch unbegrenzte Lebensdauer.

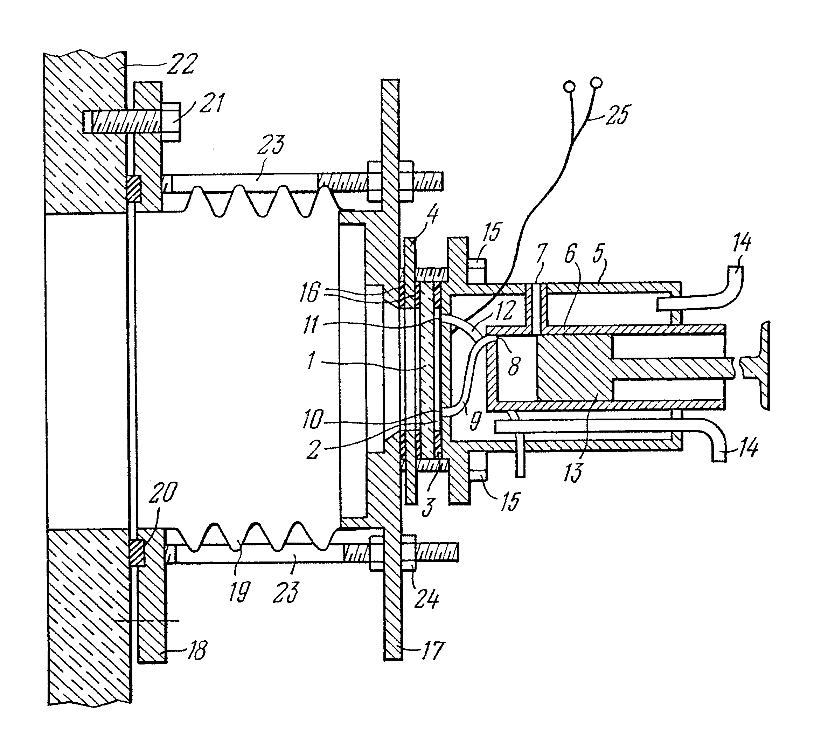

Kurze Beschreibung der Zeichnung

Im folgenden wird die vorliegende Erfindung an einem konkreten Beispiel ihrer Ausführung und anhand einer beigefügten Zeichnung erläutert, in welcher die Gesamtansicht einer erfindungsgemässen thermostatierten Flüssigkeitsküvette für spektroskopische Messungen dargestellt ist.

Beste Ausführungsform der Erfindung

Die thermostatierte Flüssigkeitsküvette für spektroskopische Messungen besitzt eine durch ein Fenster 1, einen ebenen Metallspiegel 2 und eine dazwischenliegende Ringeinlage 3 gebildete optische Kammer. Das Fenster 1 ist mit dem Spiegel 2 mit Hilfe eines Flansches 4 verbunden. Der Spiegel 2 stellt eine Wandung eines Thermostats 5 dar, innerhalb dessen sich eine Kammer 6 zur Herstellung einer Probe der zu untersuchenden Flüssigkeit befindet. Die Kammer 6 besteht aus einem Zylinder mit mehreren Öffnungen 7 zur Einbringen einer Probe in dieselbe, mit einer Öffnung 8 zur Zuführung der Probe in die optische Kammer durch eine Kapillare 9, die mit der optischen Kammer durch eine im Spiegel 2 ausgeführte Öffnung 10 in Verbindung steht. Im Oberteil des Spiegels 2 ist eine Öffnung 11 vorgesehen, durch welche die optische Kammer mit der Kapillare 12 zur Ableitung der Probe in Verbindung steht. Innerhalb der Kammer 6 ist ein Kolben 13 untergebracht. In der Stirnwand des Thermostats 5 sind Röhrchen 14 zur Einführung und Ableitung eines Wärmeträgers befestigt. Der Thermostat 5 und das optische Fenster 1 sind mittels Bolzen 15 über Ringeinlagen 16 an eine Einrichtung zur Spiegeljustierung gegenüber dem Spektro - meterstrahl angeschlossen. Die Einrichtung zur Spiegeljustierung weist einen Flansch 17 auf, welcher mit einem Flansch 18 mittels eines Faltenbalges 19 hermetisch dicht verbunden ist. Der Flansch 18 ist über eine Ringeinlage 20 mittels Bolzen 21 am Seitendeckel 22 des Spektrometers befestigt. Im Flansch 18 sind Gewindebohrungen ausgeführt, in welchen drei die Bohrungen im Flansch 17 durchdringende Stangen 23 befestigt sind, wobei zur Fixierung der Stellung des Flansches Muttern 24 vorgesehen sind. Ein Temperaturfühler 25 stellt ein innerhalb des Thermostats 5 nahe der Oberfläche des Spiegels 2 angeordnetes Thermopaar dar.

Spektroskopische Messungen in der erfindungsgemässen thermostatierte Flüssigkeitsküvette werden folgendermassen durchgeführt. Mit Hilfe der Muttern 24 werden der Flansch 17 und der damit verbundene Spiegel 2 in solch eine Stellung gebracht und fixiert, die das Treffen eines vom Spiegel 2 widerspiegelten Strahls auf den Detektor des Spektrometers ermöglicht. Die Temperatur des Thermostats 5 wird durch Zuführung eines flüssigen oder gasförmigen Wärmemittels über die Röhrchen 14 auf den notwendigen Wert gebracht. Dabei befindet sich der Kolben 13 in einer Stellung, bei der die Öffnungen 7 offen sind, durch welche die Komponenten einer Probe der zu untersuchenden Flüssigkeit mittels Spritzen eingebracht werden, d.h. der Proben - herstellungsprozess geht vonstatten. Flüssige Komponenten können gleichzeitig oder hintereinander zugeführt werden. In der Kammer 6 kann man die Auflösung von Gasen in der flüssigen Komponente der Probe durch Barbotage sowie die Zubereitung von Feststofflösungen in Flüssigkeiten durchführen. Durch Bewegen des Kolbens 13 in Richtung des Spiegels 2 wird dann die Probe durch die Öffnung 8 und die Kapillare 9 in die optische Kammer eingebracht. Der Kolben überdeckt dabei die Öffnungen 7. Bei der Durchführung dieser Operationen gleichen sich die Temperaturen der Probe und des Thermostats 5 aus. Sofort nach der Zuführung der Probe in die optische Kammer beginnt die spektroskopische Messung. Nach ihrer Beendigung wird der Kolben 13 in die Ausgangsstellung zurückgebracht, und die zu untersuchende Flüssigkeit wird mittels des Durchblasens der Kammer 6, der Kapillare 9 und der optischen Kammer durch die Öffnungen 7 entfernt. Dabei wird die Probe durch die Öffnung 11 und die Kapillare 12 herausgeführt. Neben dem Durchblasen kann man die Auswaschung mit erforderlichen Lösungsmitteln durchführen, deren Reste auch mittels des Durchblasens entfernt werden, worauf die Küvette zur weiteren Arbeit bereit ist.

Dadurch also, dass die Kammer 6 zur Herstellung einer Probe der zu untersuchenden Flüssigkeit und zu deren Vorwärmung oder Abkühlung ein Teil des Einbringungssystems ist und innerhalb des Thermostats 5 untergebracht ist, wird der Zeitraum zwischen der Herstellung der Probe und dem Beginn der Registrierung der Spektren wesentlich reduziert. Im Zusammenhang damit, dass die Flüssigkeit in der optischen Kammer unmittelbar mit dem Metallspiegel 2 kontaktiert, der gleichzeitig eine Wandung des Thermostats 5 ist, und sich das Einbringungssystem innerhalb des Thermostats 5 befindet, wird eine schnelle Erwärmung oder Abkühlung der Probe der zu untersuchenden Flüssigkeit und das Fehlen von Temperaturgefällen in der optischen Kammer gewährleistet. Darüber hinaus ist die Anzahl der Fenster 1 in dieser Konstruktion auf eins verringert, was die Verluste beim Strahldurchgang durch die Küvette herabmindert.

Gewerbliche Verwertbarkeit

Die Erfindung kann angewendet werden bei spektroskopischen Methoden der Untersuchung von Flüssigkeiten und Lösungen in der organischen, elementorganischen Chemie, in der Elektrochemie, der analytischen Chemie, in der Biochemie, Medizin, Chemie der Lösungen, bei homogener Katalse zur Bestimmung der chemischen Zusammensetzung, zur Kontrolle von Beimengungen, Verunreinigungen, zur Untersuchung von chemischen Umwandlungen und Gleichgewichten in Lösungen bei verschiedenen Temperaturen

## Ansprüche

1. Thermostatierte Flüssigkeitsküvette für spektroskopische Messungen, die eine optische Kammer zur Unterbringung einer Probe der zu untersuchenden Flüssigkeit mit einem System zur Einbringung der Probe in dieselbe und einen Thermostat (5) enthält, dadurch **gekennzeichnet,** dass die optische Kammer durch ein optisches Fenster (1) und einen eine Wandung des Thermostats (5) darstellenden Spiegel (2) gebildet ist, welch beide in einem vorgegebenen Abstand voneinander angeordnet sind, und dass die optische Kammer mit einer Einrichtung zur Spiegeljustierung gegenüber dem Strahl eines Spektrometers versehen ist, wobei das System zur Einbringung der Probe der zu untersuchenden Flüssigkeit in die optische Kammer innerhalb des Thermostats (5) untergebracht und mit einer Kammer (6) zur Herstellung der Probe der zu untersuchenden Flüssigkeit ausgestattet ist.

# INTERNATIONAL SEARCH REPORT

International Application No PCT/SU 89/00075

**I. CLASSIFICATION OF SUBJECT MATTER** (If several classification symbols apply, indicate all) [6]

According to International Patent Classification (IPC) or to both National Classification and IPC

IPC[5]    G 01 N 21/05

**II. FIELDS SEARCHED**

| Minimum Documentation Searched [7] | |
|---|---|
| Classification System \| | Classification Symbols |

IPC[4]    G01N 21/00+21/13, G01J 1/00+1/04, 3/00, 3/02

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | Zhurnal prikladnoi spektroskopii, vol. VII, Nr. 4, 1967, (Nauka i tekhnika, Minsk), A.K. Petrov et al.: "Kjuvety dlya poluchenia infrakrasnykh spektrov pogloschenia kondensirovannykh i gazoobraznykh veschestv v shirokom intervale temperatur", see pages 644-645 | 1 |
| A | L. LITTLE "Infrakrasnye spektry adsorbiro-vannykh molekul", 1969, Mir, (Moscow), see pages 51-52 | 1 |
| A | SU, A1, 1119840 (INSTITUT FIZIKI AN USSR ET AL.) 23 October 1984 | 1 |
| A | FR, A1, 2502332 (HELLMA GMBH & CO. KG) 24 September 1982 see figures 1,2 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 21 November 1989 (21.11.89) | 6 December 1989 (06.12.89) |
| International Searching Authority | Signature of Authorized Officer |
| ISA/SU | |

Form PCT/ISA/210 (second sheet) (January 1985)

| Category | Citation of Document, with indication, where appropriate, of the relevant passages | Relevant to Claim No |
|---|---|---|
| A | DE, A1, 3132926 (VEB KOMBINAT MEDIZIN–UND LABORTECHNIK) 1 July 1982 see the abstract, figures 1-3 --- | 1 |
| A | DE, A1, 3326488 (RÜDIGER,WOLFHART) 7 February 1985 see the abstract, figures 2,3 --- | 1 |
| A | DE, A1, 3305982 (INTERATOM INTERNATIONALE ATOMREAKTORBAU GMBH) 23 August 1984 see the abstract, the claims | 1 |

III. DOCUMENTS CONSIDERED TO BE RELEVANT (CONTINUED FROM THE SECOND SHEET)

-----------------------